# EUROPÄISCHE PATENTSCHRIFT

(11) **EP 3 847 379 B1**
(45) Veröffentlichungstag und Bekanntmachung des Hinweises auf die Patenterteilung: **17.01.2024**
(21) Anmeldenummer: 19755633.5
(22) Anmeldetag: 20.08.2019
(51) Int. Cl.: F16B 13/14

(54) **ANKERSTANGENBAUGRUPPE MIT FÖRDERKOPF**
ANCHOR ROD ASSEMBLY WITH PUMPING HEAD
ENSEMBLE DE TIGE D'ANCRAGE POURVU DE TÊTE DE TRANSPORT

(30) Priorität: 04.09.2018 EP 18192405
(43) Veröffentlichungstag der Anmeldung: 14.07.2021
(73) Patentinhaber: Hilti Aktiengesellschaft, 9494 Schaan (LI)
(72) Erfinder: KUHN, Martin, 82110 Germering (DE)
(74) Vertreter: Hilti Aktiengesellschaft Corporate Intellectual Property
(86) Internationale Anmeldenummer: PCT/EP2019/072216
(87) Internationale Veröffentlichungsnummer: WO 2020/048763

(56) Entgegenhaltungen:
- EP-A1- 0 856 669
- DE-A1- 3 708 764
- DE-U1- 29 820 560

## Beschreibung

Die Erfindung betrifft eine Ankerstangenbaugruppe für die Befestigung in Kunstharz-Mörtel.

Aus dem Stand der Technik sind Ankerstangen bekannt, die einen Befestigungsabschnitt aufweisen, der mindestens einen konusförmigen Abschnitt hat. Derartige Ankerstangen werden gewöhnlich zusammen mit radikalisch härtenden Mörteln verwendet, wobei selbst in gerissenen und/oder ungereinigten Bohrlöchern sehr gute Lastwerte erhalten werden können.

Auf dem Markt haben sich verschiedene Konfektionierungsformen von jeweils zweikomponentigen Verbundmörtelsystemen etabliert:
a) Injektionssysteme, die zwei jeweils pastöse Komponenten aus radikalisch härtenden Materialien, durch einen Statikmischer gepresst, verwenden, wobei die Aushärtung durch Aktivierung der Komponenten durch den Statikmischer erfolgt;
b) Injektionssysteme, die zwei jeweils pastöse Komponenten aus polyadditiv härtenden Materialien, durch einen Statikmischer gepresst, verwenden (Epoxid-Injektions-Mörtel), wobei die Aushärtung durch Aktivierung der Komponenten durch den Statikmischer erfolgt;
c) Verbundankerkapseln aus Glas oder Kunststoff, bei denen, initiiert durch den Setzvorgang der Ankerstangen, zwei flüssige, trockene oder pastöse Komponenten miteinander gemischt werden, wobei die Härtungsreaktion durch den Kontakt der Komponenten durch die Vermischung innerhalb der Aufnahmebohrung ausgelöst wird.

Die radikalisch härtenden Materialien, die polyadditiv härtenden Materialien und die Komponenten der Verbundankerkapsel werden hierin auch allgemein als Kunstharzmörtel bezeichnet.

Für die Festigkeit des Verbundmörtels und für die Erzielung möglichst hoher Auszugswerte ist es wichtig, dass die Komponenten der Mörtelmasse innig miteinander vermischt werden. Bei den ersten beiden eben beschriebenen Systemen (a) und (b) erfolgt dies kontrolliert durch den Statikmischer. Bei dem dritten System (c) führt eine rotierende Bewegung der Ankerstange um die Längsachse (in der Aufnahmebohrung) für die nötige Durchmischung. Die Ankerstange hat dabei auch die Aufgabe, die Glasampullen bzw. die Folienbeutel zu zerkleinern. Dies muss in einem Umfang erfolgen, dass es zu keiner Beeinträchtigung der Haltewerte durch an der Bohrlochwandung anhaftende größere Reststücke der Glasampullen bzw. der Folie kommt. Eine derartige Ankerstange ist etwa aus der EP 0856 669 A1 bekannt.

Im Gegensatz zu radikalisch härtenden Mörteln weisen polyadditiv härtende Mörtel, wie etwa Epoxidharze, andere Mörteleigenschaften auf. Im Speziellen ist dies eine deutlich höhere Klebekraft des Mörtels und ebenso deutlich bessere Zug-/Druckfestigkeit. Dies führt dazu, dass die die Ankerstange umgebende Mörtelhülse bei der Befestigung der Ankerstange in polyadditiv härtenden Mörtel nicht aufgebrochen werden kann, was jedoch für eine Verankerung der Ankerstange nötig ist.

Bisher sind Ankerstangen bekannt, die für ihren jeweiligen Einsatz in einem der eingangs genannten Systeme bestimmt sind. Es ist keine Ankerstange bekannt, die universell, d.h. für alle genannten Systeme (a), (b) und (c) verwendet werden kann.

Weitere Ankerstangen sind aus der DE 37 08 764 A1 und der DE 298 20 560 U1 bekannt.

Aufgabe der Erfindung ist die Bereitstellung einer Ankerstange, die, unabhängig von dem Mörtelmaterial für Injektionssysteme und für Verbundankerkapseln verwendet werden kann.

Die Aufgabe wird erfindungsgemäß durch eine Ankerstangenbaugruppe gemäß Anspruch 1 gelöst.

Gegenstand der Erfindung ist eine Ankerstangenbaugruppe für die Befestigung in Kunstharzmörtel, mit einer Ankerstange, die einen Schaftabschnitt, einen speziellen Befestigungsabschnitt und ein Kopfteil umfasst, wobei der Befestigungsabschnitt, der zwischen dem Schaftabschnitt und dem Kopfteil vorgesehen ist, zumindest bereichsweise von einem hülsenartigen Zusatzelement umgeben ist, und wobei das Kopfteil an seinem freien Ende eine Schneide aufweist. Das Kopfteil weist zudem ein axiales Ende auf, welches auch als freies Ende oder als Einsteckende der Ankerstangenbaugruppe bezeichnet wird.

Bei der erfindungsgemäßen Lösung ist vorgesehen, dass das hülsenartige Zusatzelement mindestens zwei unterschiedlichen Materialien mit unterschiedlicher Härte, wie beispielsweise aus Kunststoff oder Hartschaum oder einer Kombination aus beiden, aufweist.

Durch die unterschiedlichen Materialien, die unterschiedliche Härte haben, wird ein Stützbereich sowie ein Reißbereich ausgebildet, wobei der Stützbereich aus dem härteren Material gebildet ist.

Bevorzugt weist der spezielle Befestigungsabschnitt konusähnliche Abschnitte auf. Die konusähnlichen Abschnitte unterstützen dabei das Nachspreizverhalten des Verbundankers, beispielsweise im gerissenen Beton bei einer sich öffnenden Aufnahmebohrung, und führt zu einer besseren Einleitung des Spreizdrucks über die Länge des Verankerungsbereiches.

Wird die Ankerstange mit einer Verbundankerkapsel verwendet, dient die am freien Ende des Kopfteils vorgesehene Schneide dazu, die Verbundankerkapsel aufzubrechen und zu zerkleinern und sowohl deren Inhalt als auch den Inhalt mit der zerkleinerten Kapsel zu mischen. Für die Anwendung der Ankerstange mit Injektionssytemen ist die Schneide nicht erforderlich. Die Schneide beeinträchtigt die Funktion der Ankerstange jedoch in keiner Weise.

Die Schneide wird zweckmäßig durch eine keilförmige Abschrägung des Kopfteils gebildet.

Bevorzugt ist die Umfangsfläche des Kopfteils profiliert. Hierdurch wird bei der Verwendung von Verankerungskapseln die Mischung des Inhalts der Kapsel und die Untermischung der zerkleinerten Kapsel in die Mörtelmasse unterstützt. Ferner wird der Transport der vermischten Masse beim Eindrehen der Ankerstange vom Bohrlochgrund weg unterstützt. Bei Verwendung der Ankerstange mit Injektionssystemen wird durch die Profilierung der Umfangsfläche des Kopfteils die Mischung der Mörtelmasse beim Einbringen der Ankerstange in das mit der Mörtelmasse gefüllte Bohrloch unterstützt.

In einer Ausführungsvariante der Erfindung ist die Profilierung der Umfangsfläche des Kopfteils eine gewindeartige Profilierung, deren Drehsinn mit dem Drehsinn des grobgewindeartig profilierten Befestigungsabschnitts übereinstimmt. In der gewindeartigen Profilierung des Kopfteils wird die Mörtelmasse wie in einer Förderschnecke transportiert und dabei auch gemischt.

In einer weiteren Ausführungsvariante der Erfindung ist die Profilierung der Umfangsfläche des Kopfteils eine Rändelung in Form von im Wesentlichen axial verlaufenden Rillen, die sich vom freien Vorderende zum Befestigungsabschnitt hin erstrecken.

Damit sich die Ankerstange und der Kunstharz-Mörtel etwa im Rissfall zuverlässig voneinander lösen und die Ankerstange nachspreizen kann, weist die Oberfläche des Verankerungsbereichs gegenüber dem Kunstharzmörtel vorzugsweise nichthaftende Eigenschaften auf. Dies wird erfindungsgemäß durch ein hülsenartiges Zusatzelement erreicht.

Ein Grundgedanke der Erfindung ist es, dass die Ankerstange nicht ausschließlich mit ihrem Befestigungsabschnitt im Kunstharzmörtel eingebettet ist, sondern dass zumindest bereichsweise das hülsenartige Zusatzelement direkt mit dem Kunstharzmörtel in Kontakt kommt. Das Zusatzelement umgibt den Befestigungsabschnitt über seinen gesamten Umfang zumindest bereichsweise, wodurch sichergestellt ist, dass die Ankerstangenbaugruppe zumindest in einer bestimmten Querschnittsebene ausschließlich über das Zusatzelement im Kunstharzmörtel eingebettet ist. Insbesondere ist das hülsenförmige Zusatzelement so mit der Ankerstange verbunden, dass eine leichte Separierung von der Ankerstange erfolgen kann.

Ein weiterer Aspekt der Erfindung sieht vor, dass der Reißbereich des hülsenartigen Zusatzelements zumindest in einer Querschnittsebene durch mehrere radiale Stegabschnitte im Zusatzelement gebildet ist, die sich von der Innenseite des Zusatzelements bis zu dessen Außenseite erstrecken. Das hülsenartige Zusatzelement weist im Wesentlichen einen ringförmigen Querschnitt auf. Diese Stegabschnitte, die sich von radial innen bis radial außen erstrecken stellen sicher, dass es in Umfangsrichtung keine durchgehenden Abschnitte des Stützbereichs gibt. Dementsprechend ist über die radialen, aus dem weicheren Material gebildeten Stegabschnitte sichergestellt, dass das Zusatzelement bei einer vordefinierten Belastung reißt (vorbestimmte Sollbruchstellen), welche geringer ist als wenn nur ein und das selbe (harte) Material verwendet werden würde.

Ein Aspekt sieht vor, dass zwischen zwei benachbarten Stegabschnitten ein Kreisabschnittselement des Stützbereichs vorgesehen ist. Dementsprechend wechselt sich in einer Querschnittsebene ein Teil des Stützbereichs mit einem Teil des Reißbereichs ab, sodass eine gleichmäßige Stützung des Zusatzelements gewährleistet ist. Das Zusatzelement besteht demnach in dieser Querschnittsebene nur aus dem Stützbereich und dem Reißbereich, also den Kreisabschnitten und den radialen Stegabschnitten.

Ferner können bzw. kann der Reißbereich und/oder der Stützbereich in mehreren Querschnittsebenen des Zusatzelements ausgebildet sein, insbesondere wobei sich der Reißbereich und/oder der Stützbereich über die gesamte axiale Länge des Zusatzelements erstrecken bzw. erstreckt, vorzugsweise durchgehend. Darüber hinaus ist hierdurch gewährleistet, dass das Zusatzelement über seine gesamte axiale Länge gesehen reißen kann, wenn eine vorbestimmte Kraft auf das Zusatzelement wirkt.

Ein weiterer Aspekt der Erfindung sieht vor, dass das Zusatzelement an die Ankerstange angespritzt worden ist. Hierdurch kann die Ankerstangenbaugruppe kostengünstig hergestellt werden, da das den Befestigungsabschnitt umgebende Zusatzelement in einfacher Weise mit der Ankerstange verbunden werden kann.

Das Zusatzelement kann zumindest einen Kunststoffwerkstoff aufweisen. Bei diesem Kunststoffwerkstoff kann es sich beispielsweise um ein Polyamid handeln, welches den Stützbereich des Zusatzelements ausbildet. Das weitere Material, welches den Reißbereich ausbildet, kann ebenfalls aus einem Kunststoffwerkstoff bestehen, der eine entsprechend geringere Reißfestigkeit als Polyamid aufweist, sofern Polyamid als das Material des Stützbereichs verwendet wird. Ebenso kann aber Hartschaum oder ein flexibler Kunststoff eingesetzt werden.

Insbesondere ist das Zusatzelement ein Zweikomponentenspritzgussteil. Hierdurch ist in einfacher Weise sichergestellt, dass das aus zwei unterschiedlichen Materialien gebildete Zusatzelement in einem einzigen Verfahrensschritt an der Ankerstange befestigt werden kann.

Die Ankerstange kann dagegen aus einem Metall gebildet sein, insbesondere aus Stahl. Dies gewährleistet, dass die Ankerstange die auftretenden Lasten aufnehmen bzw. übertragen kann.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1: eine Schnittdarstellung einer Ankerstangenbaugruppe gemäß einer Ausführungsform der Erfindung;
- Figur 2: eine Darstellung eines Bereichs des Kopfteils der Ankerstangenbaugruppe aus Figur 1 im Querschnitt;
- Figur 3: eine Schnittdarstellung einer Ankerstangenbaugruppe gemäß einer alternativen Ausführungsform der Erfindung;
- Figur 4: eine Darstellung eines Bereichs des Zusatzelements der Ankerstangenbaugruppe aus Figur 1 oder 2 im Querschnitt;
- Figur 5: die in Figur 1 gezeigte erfindungsgemäße Ankerstangenbaugruppe in einem mit Epoxidharz-Mörtel aufgefüllten Bohrloch; und
- Figur 6: eine Detaildarstellung der Figur 5.

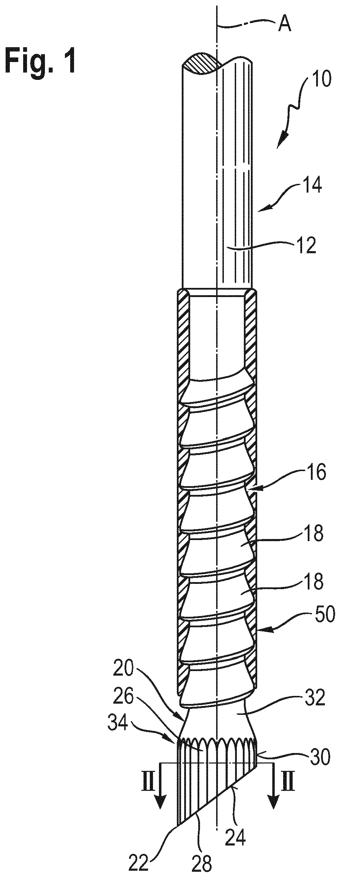

In Figur 1 ist eine Ankerstangenbaugruppe 10 gezeigt, die in einem Epoxidharz- bzw. Kunstharz-Mörtel verwendet werden kann.

Die Ankerstangenbaugruppe 10 weist eine Ankerstange 12 auf, welche einen Schaftabschnitt 14, einen Befestigungsabschnitt 16 sowie einen als Kopfteil ausgebildeten Mischabschnitt 20 umfasst.

Der Befestigungsabschnitt 16 hat mehrere konusförmige Abschnitte 18, die jeweils in axialer Richtung nacheinander in Reihe angeordnet sind und sich mit dem schmaleren Ende jeweils in Richtung des Schaftabschnitts 14 erstrecken.

Der Mischabschnitt 20 weist zudem ein axiales Ende 22 auf, welches in der gezeigten Ausführungsform im Querschnitt im Wesentlichen kreisförmig ausgebildet ist. Das axiale Ende 22 wird auch als freies Ende der Ankerstangenbaugruppe 10 bezeichnet.

Zudem umfasst die Ankerstangenbaugruppe 10 ein hülsenartiges Zusatzelement 50, welches in der gezeigten Ausführungsform teilweise geschnitten dargestellt ist.

Das Zusatzelement 50 umgibt den gesamten Befestigungsabschnitt 16. In der gezeigten ausführungsform erstreckt sich das Zusatzelement 50 in axialer Richtung von dem Schaftabschnitt 14 abgewandten Ende des Befestigungsabschnitts 16 bis an den Schaftabschnitt 14 heran, wobei das Zusatzelement 50 am Übergang zwischen dem Befestigungsabschnitt 16 und dem Schaftabschnitt 14 anliegt und mit dem Befestigungsabschnitt 16 befestigt ist.

Das Zusatzelement 50 ist in der gezeigten Ausführungsform aus zwei Kunststoffwerkstoffen gebildet, beispielsweise Polyamid und einem weicheren Kunststoffwerkstoff oder Schaum. Dementsprechend kann das Zusatzelement 50 in einem Zweikomponentenspritzgussverfahren an der Ankerstange 12 angespritzt worden sein, insbesondere am Schaftabschnitt 14, um die Ankerstangenbaugruppe 10 auszubilden.

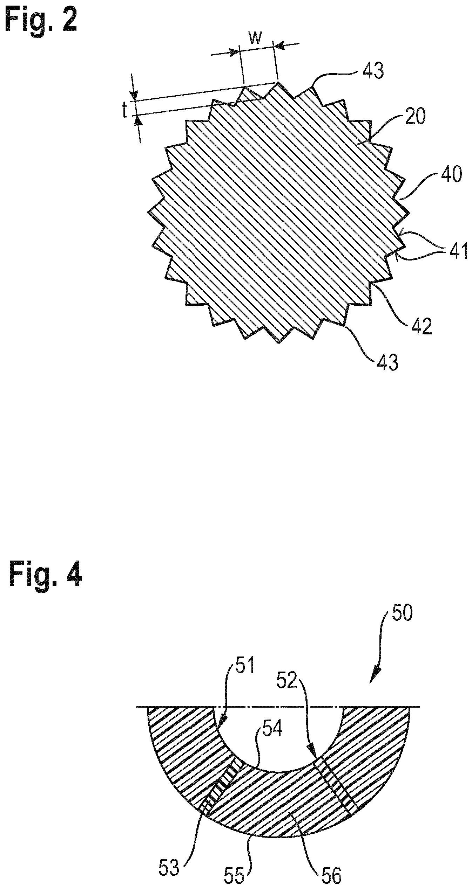

Mit Bezug auf Figur 4, in der das Zusatzelement 50 in einer Querschnittsebene teilweise dargestellt ist, geht hervor, dass das Zusatzelement 50 einen Stützbereich 51 und einen Reißbereich 52 aufweist, die jeweils durch die unterschiedlichen Materialien des Zusatzelements 50 gebildet sind.

Der Reißbereich 52 ist durch radiale Stegabschnitte 53 gebildet, von denen zwei dargestellt sind. Die radialen Stegabschnitte 53 erstrecken sich von einem radial innen liegenden Innenrand 54 des Zusatzelements 50 nach radial außen zu einem radial äußeren Außenrand 55 des Zusatzelements 50. Demnach erstrecken sich die radialen Stegabschnitte 53 in radialer Richtung gesehen über die gesamte Ausdehnung des Zusatzelements 50.

Zwischen zwei benachbarten radialen Stegabschnitten 53 ist jeweils ein Kreisabschnittselement 56 vorgesehen, das aus dem härteren Kunststoffwerkstoff gebildet ist, beispielsweise aus Polyamid. Die Kreisabschnittselemente 56 umfassen in der gezeigten Ausführungsform jeweils einen Winkelbereich von etwa 60°.

Dementsprechend sind bei dem Zusatzelement 50 gemäß der gezeigten Ausführungsform sechs radiale Stegabschnitte 53 vorgesehen.

Die radialen Stegabschnitte 53 sowie die Kreisabschnittselemente 56 sind jeweils abwechselnd in Umfangsrichtung angeordnet, sodass ein homogener Stützbereich 51 sowie ein homogener Reißbereich 52 in der Querschnittsebene ausgebildet sind.

Es können auch mehrere oder weniger radiale Stegabschnitte 53 vorgesehen sein, sodass entsprechend mehr oder weniger Kreisabschnittselemente 56 vorgesehen sind, die dann jeweils einen kleineren bzw. größeren Winkelbereich umfassen.

Vorzugsweise weist das Zusatzelement 50 über seine axiale Länge mehrere solcher Querschnittsebenen auf, wie sie in Figur 4 gezeigt sind. Dementsprechend hat das Zusatzelement 50 auch über seine axiale Länge im Wesentlichen homogene Stütz- und Reißeigenschaften.

Insbesondere erstrecken sich die radialen Stegabschnitte 53 sowie die Kreisabschnittselemente 56 in axialer Richtung des Zusatzelements 50 durchgehend. Dementsprechend reißt das Zusatzelement 50 über seine gesamte axiale Länge, sofern die vordefinierte Kraft erreicht ist.

Dies bedeutet, dass sich die Stegabschnitte 53 sowie die Kreisabschnittselemente 56 im Wesentlichen durchgehend, d.h. zwischen den beiden axialen Enden des Zusatzelements 50 erstrecken.

Die Stegabschnitte 56 bilden generell eine bzw. mehrere Sollbruchstelle(n) des Zusatzelements 50 aus.

Über den Stützbereich 51 sowie den Reißbereich 52 und die entsprechenden Materialeigenschaften der verwendeten Materialien kann die Sollbruchstelle bzw. können die Sollbruchstellen im Zusatzelement 50 ausgebildet und die benötigte Kraft eingestellt werden, bei der das Zusatzelement 50 reißt.

Hierbei trennt sich das Zusatzelement 50 im Bereich der radialen Stegabschnitte 53 auf bzw. reißt es, wodurch die vom Zusatzelement 50 umschlossene Ankerstange 12, insbesondere dessen Befestigungsabschnitt 16, in die zerrissenen Teile des Zusatzelements 50 eingreifen kann, sodass sich die Ankerstange 12 in den zerrissenen Teilen des Zusatzelements 50 mit der daran anhaftenden Mörtelhülse verankern kann.

Dementsprechend ist es möglich, dass die Ankerstange 12 in einem mit Kunstharz-Mörtel aufgefüllten Bohrloch auch dann Halt findet, wenn dies aufgrund schlechter Bohrlochreinigung und/oder schwierigen Anwendungsbedingungen ansonsten nicht möglich wäre.

Auf die Ankerstange 12 kann insbesondere über einen hier nicht dargestellten Gewindeabschnitt eine Kraft ausgeübt werden, aufgrund der das Zusatzelement 50 reißt. Der Gewindeabschnitt kann sich an den Schaftabschnitt 14 anschließen bzw. geht der Schaftabschnitt 14 in den Gewindeabschnitt über.

Der dem Bohrlochgrund zugewandte vorderste Abschnitt der Ankerstange 12 ist als Kopfteil 20 ausgebildet, an dessen freiem Vorderende 22 eine Schneide 24 vorgesehen ist, die sich etwa senkrecht zur Achse A der Ankerstange 12 erstreckt. Zur Bildung der Schneide 24 ist das Kopfteil 20 im vorderen Bereich mit einer Abschrägung 28 versehen, die sich bis zur Umfangsfläche 30 des Kopfteils 20 erstreckt.

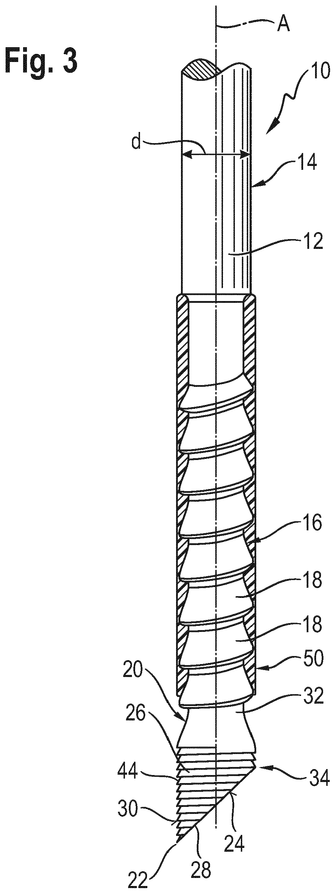

Ein weiterer wesentlicher Unterschied der beiden in Fig. 1 bzw. in Fig. 3 dargestellten Ausführungsvarianten der Erfindung besteht in der Ausbildung von Fördereinrichtungen 26, die im durchmessergrößten zylindrischen Bereich 34 des Kopfteils 20 vorgesehen sind. Gemäß Fig. 1 bestehen die Fördereinrichtungen 26 aus einer Rändelung der Umfangsfläche 30. Durch die Rändelung werden etwa axial verlaufende Rillen 40 gebildet, die sich vom mit der Schneide 24 ausgestatteten freien Vorderende 22 zum konischen Abschnitt 32 des Kopfteils 20 erstrecken.

Aus der Querschnittsdarstellung (Schnitt durch die Ebene II-II, wie in Fig. 1 dargestellt) in Fig. 2 ist ersichtlich, dass die Rillen 40 Flanken 41 aufweisen, die sich vom Rillengrund 42 schräg zur Umfangsfläche 30 erstrecken. Dort treffen sie unter spitzem Winkel auf die Flanken 41 benachbarter Rillen 40 und bilden an der Umfangsfläche 30 eine scharfe Kante 43. Die derart mit Zahnleisten versehene Umfangsfläche 30 unterstützt bei der Rotation der Ankerstange in der Aufnahmebohrung die Zerkleinerung des Gebindes, beispielsweise einer Folie aus Kunststoff. Die Tiefe t der Rillen beträgt von etwa 0,5 mm bis etwa 2,5 mm. Die größte Weite w der Rillen beträgt etwa 1 mm bis etwa 3 mm.

In dem in Fig. 3 dargestellten Ausführungsbeispiel bestehen die Fördereinrichtungen 26 aus einer gewindeartigen Profilierung 44, die in der Umfangsfläche 30 des zylindrischen Bereiches 34 des Kopfteils 20 vorgesehen ist. Die gewindeartige Profilierung 44 besitzt den gleichen Drehsinn wie das Grobgewinde 18 des Befestigungsabschnitts 16.

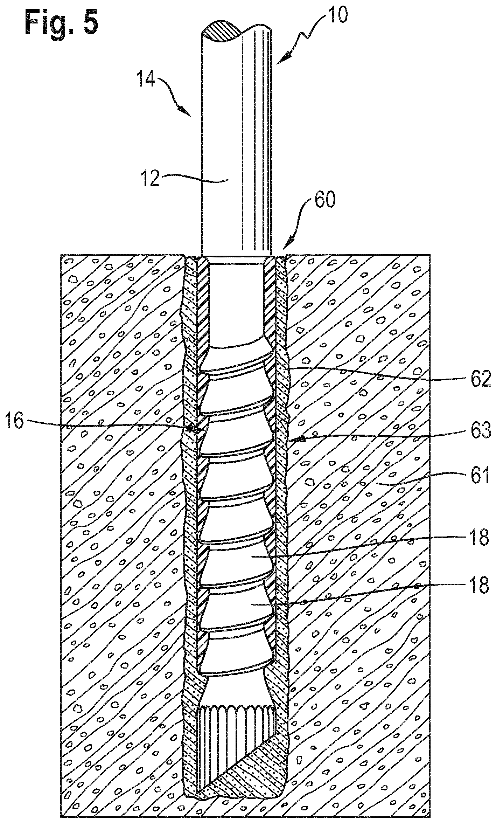

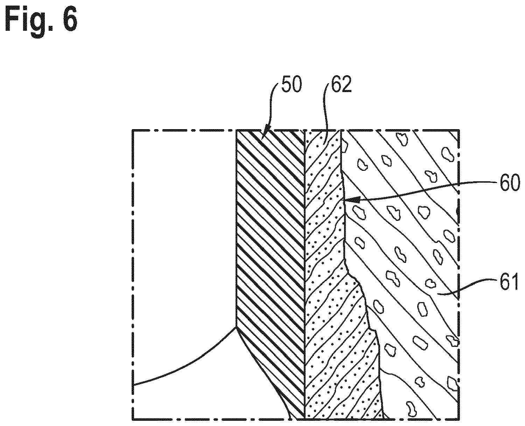

In den Figuren 5 und 6 ist gezeigt, wie eine in einem Bohrloch 60 eingesetzte Ankerstangenbaugruppe 10 aufgenommen ist.

Das Bohrloch 60 ist in einem Bauteil 61 aus Beton oder ähnlichem vorgesehen, wobei das Bohrloch 60 im Beton beispielsweise gerissen ist, weswegen das Bohrloch 60 mit einem Kunstharz-Mörtel 62 aufgefüllt worden ist, in den die Ankerstangenbaugruppe 10 eingesetzt wurde.

Der Kunstharz-Mörtel 62 bildet im ausgehärteten Zustand eine Mörtelhülse 63, die sich um das Zusatzelement 50 gebildet hat und mit diesem verbunden ist. Das Zusatzelement 50 ist insbesondere aus einem Material bzw. Materialien gebildet, mit dem/denen sich der Kunstharz-Mörtel 62 derart verbindet, als wären der Kunstharz-Mörtel 62 und das Zusatzelement 50 ein einziges Material. Der Kunstharz-Mörtel 62 und das Zusatzelement 50 gehen also eine stoffschlüssige bzw. homogene Bindung ein.

Da der Kunstharz-Mörtel 62 ausgehärtet ist, ist die Ankerstangenbaugruppe 10, insbesondere das Zusatzelement 50, fest im Kunstharz-Mörtel 62 aufgenommen.

Sobald über den Schaftabschnitt 14 bzw. den Gewindeabschnitt (nicht gezeigt) eine Kraft auf die Ankerstangenbaugruppe 10 aufgebracht wird, zerreißt das Zusatzelement 50 mit der damit verbundenen Mörtelhülse 63 in einzelne Teile. Aufgrund des Zusatzelements 50 hat die Mörtelhülse 63 eine geringere Wandstärke, als wenn die Ankerstange direkt in das Bohrloch eingesetzt wäre. Auch dies erleichtert es, die Mörtelhülse 63 bei Zugbelastungen zu zerbrechen.

Anhand der zerrissenen Teile des Zusatzelements 50 kann die Ankerstange 12 dann eine Spreizwirkung aufbauen, welche zur Steigerung der Tragfähigkeit beiträgt.

Aufgrund der Umhüllung der Ankerstange 12 ist es mit der Ankerstangenbaugruppe 10 möglich, die Ankerstange 12 in einem mit Kunstharz-Mörtel, insbesondere mit Epoxidharz-Mörtel aufgefüllten Bohrloch 60 zu befestigen, insbesondere auch dann, wenn das Bohrloch 60 zuvor nicht gereinigt worden ist.

Des Weiteren kann aufgrund des hülsenartigen Zusatzelements 50 Kunstharz-Mörtel 62 eingespart werden, was die Gesamtkosten pro Befestigungspunkt reduziert.

Generell ist das Zusatzelement 50 als ein kappen- bzw. hülsenartiges Element ausgebildet, das auch als ein Dübel, insbesondere Reißdübel, bezeichnet werden kann.

Die am Beispiel von zwei Ausführungsvarianten erläuterte Ankerstange gewährleistet eine zuverlässige Zerkleinerung des Gebindes, in dem die Kunstharz-Mörtelmasse, bzw. seine Komponenten enthalten sind. Durch die erfindungsgemäße geometrische Ausbildung des Mischabschnitts der Ankerstange werden die einzelnen Komponenten von zwei- oder mehrkomponentigen Mörtelsystemen innig gemischt. Die gemischte Mörtelmasse wird gleichmäßig über den Verankerungsbereich der Ankerstange verteilt.

Die erfindungsgemäße Geometrie der Ankerstange unterstützt auch das Nachspreizverhalten der Ankerstange, wodurch sie auch in gerissenem Untergrund, bei sich öffnendem Riss ausreichend hohe Haltewerte gewährleistet.

## Patentansprüche

1. Ankerstangenbaugruppe (10) für die Befestigung in Kunstharz-Mörtel (62), mit einer Ankerstange (12), die einen Schaftabschnitt (14), einen speziellen Befestigungsabschnitt (16) und ein Kopfteil (20), das an seinem freien Ende (22) eine Schneide (24) aufweist, umfasst, und mit einem hülsenartigen Zusatzelement (50),
wobei der Befestigungsabschnitt (16), der zwischen dem Schaftabschnitt (14) und dem Kopfteil (20) vorgesehen ist, zumindest bereichsweise von dem hülsenartigen Zusatzelement (50) umgeben ist,
**dadurch gekennzeichnet, dass** das hülsenartige Zusatzelement (50) zwei unterschiedliche Materialien aufweist, die eine unterschiedliche Härte haben und einen Stützbereich (51) und einen Reißbereich (52) ausbilden, wobei der Stützbereich (51) aus dem härteren Material gebildet ist.

2. Ankerstangenbaugruppe (10) nach Anspruch 1, **dadurch gekennzeichnet, dass** am Kopfteil (20) Fördereinrichtungen (26) für den Kunstharz-Mörtel (62) vorgesehen sind.

3. Ankerstangenbaugruppe (10) nach Anspruch 1 oder 2, **dadurch gekennzeichnet, dass** die Fördereinrichtungen (26) im durchmessergrößten Bereich des Kopfteils (20) angeordnet sind und von einer Profilierung der Umfangsfläche (30) gebildet werden.

4. Ankerstangenbaugruppe (10) nach Anspruch 3, **dadurch gekennzeichnet, dass** die Profilierung der Umfangsfläche (30) eine Rändelung in Form von im Wesentlichen axial verlaufenden Rillen (40) ist, die sich vom freien Vorderende (22) zum Befestigungsabschnitt (16) hin erstrecken.

5. Ankerstangenbaugruppe (10) nach Anspruch 3, **dadurch gekennzeichnet, dass** die Profilierung der Umfangsfläche (30) gewindeartige Profilierungen in der Umfangsfläche (30) sind.

6. Ankerstangenbaugruppe (10) nach einem der vorhergehenden Ansprüche, **dadurch gekennzeichnet, dass** sich das hülsenartige Zusatzelement (50) in axialer Richtung über den gesamten Befestigungsabschnitt (16) erstreckt.

7. Ankerstangenbaugruppe (10) nach einem der vorhergehenden Ansprüche, **dadurch gekennzeichnet, dass** sich das hülsenartige Zusatzelement (50) in axialer Richtung bis in den Schaftabschnitt (14) erstreckt, insbesondere zumindest am Schaftabschnitt (14) befestigt ist, vorzugsweise stoffschlüssig.

8. Ankerstangenbaugruppe (10) nach einem der vorhergehenden Ansprüche, **dadurch gekennzeichnet, dass** der Reißbereich (52) des hülsenartigen Zusatzelements (50) zumindest in einer Querschnittsebene durch mehrere radiale Stegabschnitte (53) im Zusatzelement (50) gebildet ist, die sich von der Innenseite des Zusatzelements (50) bis zu dessen Außenseite erstrecken.

9. Ankerstangenbaugruppe (10) nach einem der vorhergehenden Ansprüche, **dadurch gekennzeichnet, dass** der Stützbereich (51) zumindest in einer Querschnittsebene durch mehrere Kreisabschnittselemente (56) gebildet ist.

10. Ankerstangenbaugruppe (10) nach Anspruch 8 und 9, **dadurch gekennzeichnet, dass** zwischen zwei benachbarten Stegabschnitten (53) ein Kreisabschnittselement (56) des Stützbereichs (51) vorgesehen ist.

11. Ankerstangenbaugruppe (10) nach einem der vorhergehenden Ansprüche, **dadurch gekennzeichnet, dass** der Reißbereich (52) und/oder der Stützbereich (51) in mehreren Querschnittsebenen des Zusatzelements (50) ausgebildet sind bzw. ist, insbesondere wobei sich der Reißbereich (52) und/oder der Stützbereich (51) über die gesamte axiale Länge des hülsenartigen Zusatzelements (50) erstrecken bzw. erstreckt, vorzugsweise durchgehend.

12. Ankerstangenbaugruppe (10) nach einem der vorhergehenden Ansprüche, **dadurch gekennzeichnet, dass** das hülsenartige Zusatzelement (50) mindestens eine vorbestimmte Sollbruchstelle aufweist.

13. Ankerstangenbaugruppe (10) nach einem der vorhergehenden Ansprüche, **dadurch gekennzeichnet, dass** das hülsenartige Zusatzelement (50) zumindest einen Kunststoffwerkstoff aufweist.

## Claims

1. Anchor rod assembly (10) for fastening in synthetic resin mortar (62), having an anchor rod (12) which has a shank portion (14), a special fastening portion (16), and a head part (20) which comprises a cutting edge (24) at the free end thereof (22), and having a sleeve-like additional element (50),
the fastening portion (16), which is provided between the shank portion (14) and the head part (20), is surrounded at least in regions by the sleeve-like additional element (50),
**characterized in that** the sleeve-like additional element (50) comprises two different materials which have a different hardness and form a support region (51) and a tear region (52), the support region (51) being formed of the harder material.

2. Anchor rod assembly (10) according to claim 1, **characterized in that** conveying devices (26) for the synthetic resin mortar (62) are provided on the head part (20).

3. Anchor rod assembly (10) according to either claim 1 or claim 2, **characterized in that** the conveying devices (26) are arranged in the region of the head part (20) that has the greatest diameter, and are formed by a profiling of the circumferential surface (30).

4. Anchor rod assembly (10) according to claim 3, **characterized in that** the profiling of the circumferential surface (30) is a knurling in the form of substantially axially extending grooves (40) which extend from the free front end (22) to the fastening portion (16).

5. Anchor rod assembly (10) according to claim 3, **characterized in that** the profiling of the circumferential surface (30) is thread-like profiling in the circumferential surface (30).

6. Anchor rod assembly (10) according to any of the preceding claims, **characterized in that** the sleeve-like additional element (50) extends in the axial direction over the entire fastening portion (16).

7. Anchor rod assembly (10) according to any of the preceding claims, **characterized in that** the sleeve-like additional element (50) extends in the axial direction up to the shank portion (14), in particular is fastened at least to the shank portion (14), preferably in an integrally bonded manner.

8. Anchor rod assembly (10) according to any of the preceding claims, **characterized in that** the tear region (52) of the sleeve-like additional element (50) is formed at least in one cross-sectional plane by a plurality of radial connecting portions (53) in the additional element (50), which extend from the inside of the additional element (50) to the outside thereof.

9. Anchor rod assembly (10) according to any of the preceding claims, **characterized in that** the support region (51) is formed at least in one cross-sectional plane by a plurality of circular segment elements (56).

10. Anchor rod assembly (10) according to claim 8 and claim 9, **characterized in that** a circular segment element (56) of the support region (51) is provided between two adjacent connecting portions (53).

11. Anchor rod assembly (10) according to any of the preceding claims, **characterized in that** the tear region (52) and/or the support region (51) are/is formed in a plurality of cross-sectional planes of the additional element (50), the tear region (52) and/or the support region (51) in particular extending over the entire axial length of the sleeve-like additional element (50), preferably continuously.

12. Anchor rod assembly (10) according to any of the preceding claims, **characterized in that** the sleeve-like additional element (50) has at least one predetermined breaking point.

13. Anchor rod assembly (10) according to any of the preceding claims, **characterized in that** the sleeve-like additional element (50) comprises at least one plastics material.

## Revendications

1. Ensemble de barre d'ancrage (10) destiné à être fixé dans un mortier de résine synthétique (62), comportant une barre d'ancrage (12), qui présente une section de tige (14), une section spéciale de fixation (16) et une partie de tête (20), qui présente, au niveau de son extrémité libre (22), un tranchant (24) et comportant un élément additionnel de type manchon (50),
la section de fixation (16), qui est prévue entre la section de tige (14) et la partie de tête (20), étant entourée au moins par endroits par l'élément additionnel de type manchon (50),
**caractérisé en ce que** l'élément additionnel de type manchon (50) présente deux matériaux différents, qui présentent une dureté différente et forment une zone de support (51) et une zone d'arrachage (52), la zone de support (51) étant formée à partir du matériau plus dur.

2. Ensemble de barre d'ancrage (10) selon la revendication 1, **caractérisé en ce que** des dispositifs de transport (26) pour le mortier de résine synthétique (62) sont prévus au niveau de la partie de tête (20).

3. Ensemble de barre d'ancrage (10) selon la revendication 1 ou 2, **caractérisé en ce que** les dispositifs de transport (26) sont agencés dans la zone du diamètre le plus grand de la partie de tête (20) et formés par un profilage de la surface périphérique (30).

4. Ensemble de barre d'ancrage (10) selon la revendication 3, **caractérisé en ce que** le profilage de la surface périphérique (30) est un moletage sous la forme de rainures (40) s'étendant de manière sensiblement axiale, qui s'étendent à partir de l'extrémité avant libre (22) vers la section de fixation (16).

5. Ensemble de barre d'ancrage (10) selon la revendication 3, **caractérisé en ce que** le profilage de la surface périphérique (30) consiste en des profilages de type filetage dans la surface périphérique (30).

6. Ensemble de barre d'ancrage (10) selon l'une des revendications précédentes, **caractérisé en ce que** l'élément additionnel de type manchon (50) s'étend dans la direction axiale sur toute la section de fixation (16).

7. Ensemble de barre d'ancrage (10) selon l'une des revendications précédentes, **caractérisé en ce que** l'élément additionnel de type manchon (50) s'étend dans la direction axiale jusque dans la section de tige (14), en particulier est fixé au moins à la section de tige (14), de préférence par liaison de matière.

8. Ensemble de barre d'ancrage (10) selon l'une des revendications précédentes, **caractérisé en ce que** la zone d'arrachage (52) de l'élément additionnel sous forme de manchon (50) est formée, au moins dans un plan transversal, par plusieurs sections radiales d'âme (53) dans l'élément additionnel (50), qui s'étendent depuis la face interne de l'élément additionnel (50) jusqu'à sa face externe.

9. Ensemble de barre d'ancrage (10) selon l'une des revendications précédentes, **caractérisé en ce que** la zone de support (51) est formée, au moins dans un plan transversal, par plusieurs éléments en segment de cercle (56).

10. Ensemble de barre d'ancrage (10) selon la revendication 8 et 9, **caractérisé en ce qu'**un élément en segment de cercle (56) de la zone de support (51) est prévu entre deux sections d'âme (53) adjacentes.

11. Ensemble de barre d'ancrage (10) selon l'une des revendications précédentes, **caractérisé en ce que** la zone d'arrachage (52) et/ou la zone de support (51) est/sont formée(s) dans plusieurs plans transversaux de l'élément additionnel (50), la zone d'arrachage (52) et/ou la zone de support (51) s'étendant en particulier sur toute la longueur axiale de l'élément additionnel de type manchon (50), de préférence de manière continue.

12. Ensemble de barre d'ancrage (10) selon l'une des revendications précédentes, **caractérisé en ce que** l'élément additionnel de type manchon (50) présente au moins un point de rupture prédéfini.

13. Ensemble de barre d'ancrage (10) selon l'une des revendications précédentes, **caractérisé en ce que** l'élément additionnel de type manchon (50) présente au moins un matériau synthétique.
